# EUROPÄISCHE PATENTSCHRIFT

(11) **EP 1 060 669 B1**
(45) Veröffentlichungstag und Bekanntmachung des Hinweises auf die Patenterteilung: **18.05.2005**
(21) Anmeldenummer: 00111527.8
(22) Anmeldetag: 30.05.2000
(51) Int. Cl.: A21B 3/13

(54) **Unterlage zum Transportieren und Fertigstellen von Rohteigen**
Supporting base for transporting and finishing of dough
Support pour transport et d'achèvement de pâte

(30) Priorität: 18.06.1999 DE 19927935
(43) Veröffentlichungstag der Anmeldung: 20.12.2000
(73) Patentinhaber: Dr. AUGUST OETKER NAHRUNGSMITTEL KG, 33617 Bielefeld (DE)
(72) Erfinder: Dehn, Stefan, 33649 Bielefeld (DE); Spiegel, Udo Dr., 33619 Bielefeld (DE); Knoll, Eckhard, 54472 Brauneberg (DE); Krömmelbein, Volker, 36110 Schlitz (DE); Jöckel, Walter, 36369 Lautertal (DE); Reis, Sabine, 36304 Alsfeld (DE); Greb, Hartmut, 36369 Lautertal (DE)
(74) Vertreter: Meyer, Gerd

(56) Entgegenhaltungen:
- EP-A- 0 664 082
- WO-A-96/11576
- US-A- 1 505 999
- US-A- 2 027 296
- US-A- 2 051 960

## Beschreibung

Während der Produktion, für den Transport und für das Fertigbacken eines noch im Rohzustand befindlichen Teiges wie zum Beispiel Kuchen, Pizza und andere Rohteige werden diese Produkte in aller Regel vorgeformt und in Formen oder auf Platten weiterverarbeitet.

Bis zum Tiefgefrieren ist der Teig bekanntermaßen eine mehr oder weniger weiche klebrige Masse, die wenig bis keine Stabilität aufweist. Die umgebende Form kann je nach den nachfolgenden Schritten den Backprozeß erheblich beeinflussen. Weist sie zum Beispiel eine hohe mechanische Stabilität auf und besteht sie nicht aus wärmestabilen Material muß der Teig von der Form getrennt und separat aufgebacken werden. So sind zum Beispiel Formen aus Wellpappe oder Backunterlagen bzw. -scheiben mit hoher mechanischer Stabilität nicht geeignet, da sie den Aufback- bzw. Garprozeß des Backgutes negativ beeinflussen und somit vor dem Backprozeß vom Teig zu trennen sind.

Beim Transport zum Verbraucher und auch beim Entfernen des Transportmittels besteht die große Gefahr, daß durch das Antauen des Produkts auf dem Backgutträger eine innige Verklebung bzw. Verbindung erfolgt, so daß eine saubere Trennung zwischen Backgutträger und Teig nicht mehr gewährleistet ist.

Schon bei der Produktion von Teigrohlingen treten durch die unstabile Teigmasse Probleme auf, die sich nur dadurch lösen lassen, daß Unterlegscheiben verwendet werden. Auf diesen muß der Teig allerdings auch haften, damit sowohl während der Produktion als auch während des Transports, bei dem der Teigrohling hochkant gestellt wird, die Form des Produkts nicht beeinträchtigt wird. Beim Verbraucher angelangt, muß das Produkt leicht von der Scheibe getrennt werden können, und zwar bei tiefgekühlten Produkten auch im angetauten Zustand, um im Backofen oder/und der Mikrowelle zubereitet werden zu können.

Um eine Trennung vom Träger bzw. dem Formmaterial zu ermöglichen, wird bekannterweise zwischen dem Rohteig und dem Backträger eine Trennschicht eingezogen (zum Beispiel Backpapier), die in der Lage ist, im Backofen mit aufgebacken zu werden, ohne die Eigenschaften des Backgutes nachteilig zu beeinflussen.

In der EP-A-0664082 wird eine plattförmige Backunterlage aus einem Material mit Antihafteigenschaften bzw. aus einem Trägermaterial mit einer Antihaftbeschichtung vorgeschlagen, wobei es sich dabei um mindestens 3-schichtiges Material mit einer Zwischenschicht, bestehend aus einem Stärkekleber handelt. Im Gegensatz zur vorliegenden Erfindung wird die Klebeeigenschaft des Stärkeklebers nicht kontrollierbar aufgehoben, sondern willkürlich und nicht kontrolliert, wie dies gemäß der vorliegenden Erfindung vorgesehen ist. Zudem ist nicht vorgeschlagen worden, die oberste Schicht, also das Backpapier, mit Einprägungen zu versehen. Dies ist jedoch ein erheblicher Nachteil gegenüber dem Gegenstand der vorliegenden Erfindung. Die Aufgabe der vorliegenden Erfindung besteht darin, für den Verarbeitungs- und Transportprozeß zwischen dem Backgutträger und der Trennschicht eine fest verbundene, gleichwohl kontrollierte lösbare Verbindung aufzubringen, so daß eine hohe mechanische Transportstabilitität zwischen den beiden Materialien gewährleistet ist, eine Trennung jedoch ohne Probleme vorgenommen werden kann.

Die vorstehende Aufgabe wird durch den kennzeichnenden Teil des Anspruchs 1 gelöst. Weitere Lösungsformen ergeben sich aus den Unteransprüchen.

Das vorstehend skizzierte Problem und die sich daraus ergebende Aufgabe konnten dadurch gelöst werden, daß zwischen Backgutträger und Backfolie eine dritte Schicht eingezogen wurde, die zu einer gezielt lösbaren Verbindung des Backgutträgers von der Backgutfolie unter den gewünschten Bedingungen führt. Als einfachstes Beispiel ist hier zu nennen, daß Wasser und ein wasserhaltiger Leim die Backfolie mit dem Träger verbinden und diese derart gestaltete Form im Rahmen der normalen Herstellung gut zu bearbeiten und füllen zu können. Dieses System weist den Vorteil auf, daß es nach Frostvorgängen zum Beispiel keine mechanische Stabilität mehr aufweist und ein einfaches Lösen der Backfolie vom Backgutträger ermöglicht.

Ein weiteres Beispiel für die Lösung der gestellten Aufgabe sind hierfür bestimmte Klebstoffe, die der thermischen Belastung durch Frosten und/oder Kühlen nicht standhalten, und die für die Produktion notwendige mechanische Stabilität zwischen Backgutträger und Backfolie gewährleisten, diese aber verlieren, nachdem die Produkte gekühlt und eingefroren worden sind. Es sind auch Kleber zu verwenden, die geeignete mechanische Fähigkeiten aufweisen, um ein reversibles Kleben der Backfolie am Backgutträger bei allen Temperaturen zu ermöglichen, so daß in jedem Zustand eine hohe mechanische Festigkeit und Klebkraft gewährleistet ist, die durch ein Trennen der beiden Komponenten ohne weiteres möglich ist.

Mit dem letzteren Schritt werden auch neue Verpackungssysteme ermöglicht, die es bisher in dieser Form nicht gegeben hat. So wären temperaturempfindliche Kunststoffe, Wellpappen mit Ein- und Mehrfachwellen und auch Kombinationen dieser Materialien als Träger geeignet, wenn nur die oberste Schicht mit einer backgeeigneten Folie beklebt ist.

Um eine Haftung zwischen Teig und Backfolie zu erreichen, wird vorgeschlagen, die oberste Schicht des Backgutträgers zu Prägen, wobei eine Art Widerhaken entstehen. Diese Prägung sollte vorzugsweise diagonal verlaufen und über die gesamte Oberfläche verteilt sein. Vorzugsweise sollte die unterste Schicht und die oberste Schicht zusammen geprägt werden, und durch die Prägung eine Verbindung zwischen Backfolie und Trägerscheibe bewirkt wird.

Die beigefügten Zeichnungen zeigen Ausführungsbeispiele betreffend den erfindungsgemäßen Gegenstand. Dabei wurde folgende Bezifferung verwendet:
1 = Backfolie
2 = Klebeschicht
3 = Papierwelle
4 = untere Schicht beliebiges Material
5 = Kunststoff- oder Metallträger
6 = Wellpappenkombination
7 = Perforation
8 = Anfaßvorrichtung

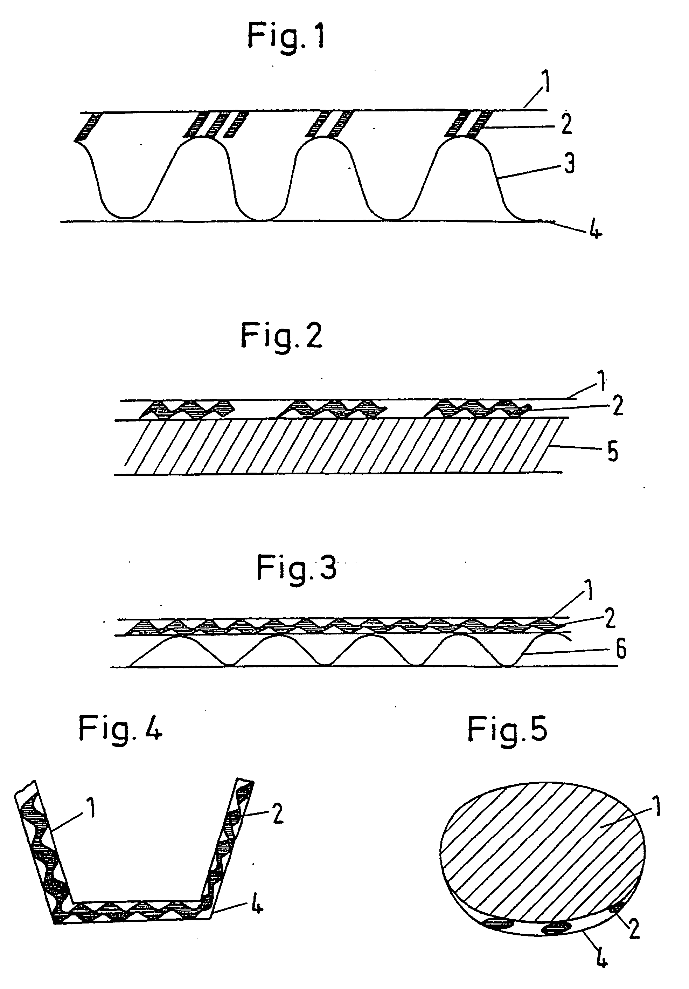

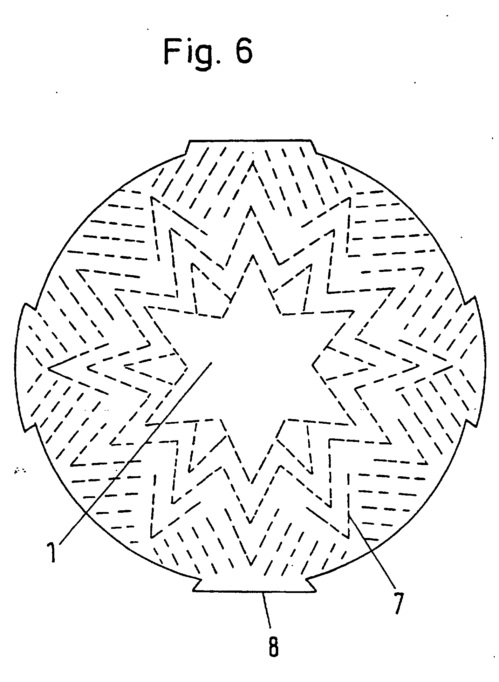

Die Figuren 1, 2 und 3 zeigen die Verwendung des erfindungsgemäßen Materials in einer flächigen Form. Die Figur 4 zeigt eine kastenförmige Ausgestaltung und die Figur 5 eine kreisförmige Ausgestaltung.

## Patentansprüche

1. Unterlage zum Transportieren und Backen von Rohteigen, welche aus mindestens drei Schichten besteht, wobei die oberste Schicht eine Trennschicht ist und die dritte Schicht eine stabilisierende Unterschicht darstellt, wobei die mittlere Schicht temperatur abhängige Klebeeigenschaften aufweist, die zu einer vorherbestimmten Temperatur aufgehoben werden und die oberste Schicht eine Prägung aufweist, die in vorherbestimmter Weise über die gesamte Oberfläche der Oberschicht verteilt ist.

2. Unterlage nach Anspruch 1, **dadurch gekennzeichnet, daß** Kleber verwendet werden, deren Klebeeigenschaften bei Temperaturen bei bzw. unter 0 °C aufgehoben werden.

3. Unterlage nach Anspruch 1 und einem oder mehreren der vorhergehenden Ansprüche, **dadurch gekennzeichnet, daß** es sich bei der obersten Schicht um ein Backpapier handelt.

4. Unterlage nach Anspruch 1 und einem oder mehreren der vorhergehenden Ansprüche, **dadurch gekennzeichnet, daß** der Kleber Wasser oder wasserlöslicher Leim ist, der zu einem vorherbestimmten Zeitpunkt seine Klebeeigenschaften verliert.

5. Unterlage nach Anspruch 1 und einem oder mehreren der vorhergehenden Ansprüche, **dadurch gekennzeichnet, daß** der Backgutträger das Aufbacken innerhalb einer Form ermöglicht.

6. Unterlage nach Anspruch 1 und einem oder mehreren der vorhergehenden Ansprüche, **dadurch gekennzeichnet, daß** der Kleber erst während der Produktion des Backgutes zwischen der Backfolie und dem Backgutträger aufgebracht und aktiviert wird.

7. Unterlage nach Anspruch 1 und einem oder mehreren der vorhergehenden Ansprüche, **dadurch gekennzeichnet, daß** der Backgutträger aus beliebigem formstabilen Material besteht.

8. Unterlage nach Anspruch 1 und einem oder mehreren der vorhergehenden Ansprüche, **dadurch gekennzeichnet, daß** der Backgutträger aus zwei verformbaren Folien besteht.

9. Unterlage nach Anspruch 1 und einem oder mehreren der vorhergehenden Ansprüche, **dadurch gekennzeichnet, daß** die Backfolie eine andere Form aufweist als der Backgutträger.

10. Unterlage nach Anspruch 1 und einem oder mehreren der vorhergehenden Ansprüche, **dadurch gekennzeichnet, daß** der Kleber ganzflächig aufgebracht wird.

11. Unterlage nach Anspruch 1 und einem oder mehreren der vorhergehenden Ansprüche, **dadurch gekennzeichnet, daß** der Kleber teilflächig aufgebracht wird.

12. Unterlage nach Anspruch 1 und einem oder mehreren der vorhergehenden Ansprüche, **dadurch gekennzeichnet, daß** die Prägung diagonal verläuft.

13. Unterlage nach Anspruch 1 und einem oder mehreren der vorhergehenden Ansprüche, **dadurch gekennzeichnet, daß** die unterste Schicht eine mit der Prägung der obersten Schicht gleich verlaufende Prägung aufweist.

14. Unterlage nach Anspruch 1 und einem oder mehreren der vorhergehenden Ansprüche, **dadurch gekennzeichnet, daß** zwischen Backfolie und Trägerscheibe eine durch die Prägung der Backfolie bewirkte Verbindung besteht.

## Claims

1. Support for transporting and baking raw doughs, which consists of at least three layers, wherein the uppermost layer is a separating layer and the third layer is a stabilising underneath layer, wherein the middle layer has temperature-dependent adhesive properties, which can be removed at a predetermined temperature and the uppermost layer has an impressing which is distributed in predetermined manner over the entire surface of the upper layer.

2. Support according to claim 1, **characterised in that** adhesives are used, the adhesive characteristics of which are eliminated at temperatures at or below 0° C.

3. Support according to claim 1 and one or more of the preceding claims, **characterised in that** the uppermost layer is baking paper.

4. Support according to claim 1 and one or more of the preceding claims, **characterised in that** the adhesive is water or water-soluble glue which loses its adhesive properties at a predetermined point in time.

5. Support according to claim 1 and one or more of the preceding claims, **characterised in that** the baked goods support enables heating-up within a mould.

6. Support according to claim 1 and one or more of the preceding claims, **characterised in that** the adhesive is applied and activated between the baking film and the baked goods support only during production of the baked goods.

7. Support according to claim 1 and one or more of the preceding claims, **characterised in that** the baked goods support consists of any material which is stable in shape.

8. Support according to claim 1 and one or more of the preceding claims, **characterised in that** the baked goods support consists of two deformable foils.

9. Support according to claim 1 and one or more of the preceding claims, **characterised in that** the baking film has a shape different from the baked goods support.

10. Support according to claim 1 and one or more of the preceding claims, **characterised in that** the adhesive is applied over the whole area.

11. Support according to claim 1 and one or more of the preceding claims, **characterised in that** the adhesive is applied over part of the area.

12. Support according to claim 1 and one or more of the preceding claims, **characterised in that** the impressing extends diagonally.

13. Support according to claim 1 and one or more of the preceding claims, **characterised in that** the lowermost layer has an impressing extending the same as the impressing of the uppermost layer.

14. Support according to claim 1 and one or more of the preceding claims, **characterised in that** a connection produced by the impressing of the baking film exists between baking film and support plate.

## Revendications

1. Support sous-jacent pour le transport et la cuisson de pâtes cuites, constitué d'au moins trois couches parmi lesquelles la couche supérieure extrême représente une couche séparatrice, et la troisième couche représente une sous-couche stabilisatrice, la couche centrale possédant des propriétés d'adhérence qui dépendent de la température et sont neutralisées à une température prédéterminée; et la couche supérieure extrême comportant une empreinte répartie, de manière prédéterminée, sur toute la surface de la couche supérieure.

2. Support sous-jacent selon la revendication 1, **caractérisé par le fait qu'**on utilise des adhésifs dont les propriétés d'adhérence sont neutralisées à des températures de l'ordre de 0°C, ou en deçà.

3. Support sous-jacent selon la revendication 1 et l'une ou plusieurs des revendications précédentes, **caractérisé par le fait que** la couche supérieure extrême se présente comme un papier de cuisson.

4. Support sous-jacent selon la revendication 1 et l'une ou plusieurs des revendications précédentes, **caractérisé par le fait que** l'adhésif est de l'eau ou une colle hydrosoluble perdant ses propriétés d'adhérence à un instant prédéterminé.

5. Support sous-jacent selon la revendication 1 et l'une ou plusieurs des revendications précédentes, **caractérisé par le fait que** le support du produit cuit autorise l'amorce de cuisson à l'intérieur d'un moule.

6. Support sous-jacent selon la revendication 1 et l'une ou plusieurs des revendications précédentes, **caractérisé par le fait que** l'adhésif n'est déposé et activé, entre la feuille de cuisson et le support du produit cuit, que durant la production dudit produit cuit.

7. Support sous-jacent selon la revendication 1 et l'une ou plusieurs des revendications précédentes, **caractérisé par le fait que** le support du produit cuit consiste en n'importe quel matériau de forme stable.

8. Support sous-jacent selon la revendication 1 et l'une ou plusieurs des revendications précédentes, **caractérisé par le fait que** le support du produit cuit se compose de deux feuilles déformables.

9. Support sous-jacent selon la revendication 1 et l'une ou plusieurs des revendications précédentes, **caractérisé par le fait que** la feuille de cuisson possède une forme autre que celle du support du produit cuit.

10. Support sous-jacent selon la revendication 1 et l'une ou plusieurs des revendications précédentes, **caractérisé par le fait que** l'adhésif est déposé sur toute la surface.

11. Support sous-jacent selon la revendication 1 et l'une ou plusieurs des revendications précédentes, **caractérisé par le fait que** l'adhésif est déposé sur une partie de la surface.

12. Support sous-jacent selon la revendication 1 et l'une ou plusieurs des revendications précédentes, **caractérisé par le fait que** l'empreinte s'étend diagonalement.

13. Support sous-jacent selon la revendication 1 et l'une ou plusieurs des revendications précédentes, **caractérisé par le fait que** la couche inférieure extrême comporte une empreinte présentant une étendue identique à celle de l'empreinte de la couche supérieure extrême.

14. Support sous-jacent selon la revendication 1 et l'une ou plusieurs des revendications précédentes, **caractérisé par le fait qu'**une liaison, provoquée par l'empreinte de la feuille de cuisson, est établie entre ladite feuille de cuisson et le disque de support.
